# EUROPEAN PATENT SPECIFICATION

(11) **EP 2 528 222 B1**
(45) Date of publication and mention of the grant of the patent: **11.03.2015**
(21) Application number: 11167795.1
(22) Date of filing: 27.05.2011
(51) Int. Cl.: H02M 7/487, H02J 3/18

(54) **Method for the determination of a control scheme for a NPC VSC, in particular as an active power filter**
Verfahren zur Bestimmung eines Steuerschemas für einen NPC VSC, insbesondere einen aktiven Energiefilter
Procédé pour la détermination d'un schéma de contrôle pour un NPC VSC, en particulier en tant que filtre de puissance active

(43) Date of publication of application: 28.11.2012
(73) Proprietor: ALSTOM Technology Ltd, 5400 Baden (CH)
(72) Inventor: Soeiro, Thiago Batista, 8051 Zürich (CH); Kolar, Johann W., 8044 Zürich (CH); Ranstad, Per, SE-352 35 Växjö (SE); Linner, Jörgen, S-325 35 Växjö (SE)

(56) References cited:
- SCHWEIZER M ET AL: "Comparison and implementation of a 3-level NPC voltage link back-to-back converter with SiC and Si diodes", APPLIED POWER ELECTRONICS CONFERENCE AND EXPOSITION (APEC), 2010 TWENTY-FIFTH ANNUAL IEEE, IEEE, PISCATAWAY, NJ, USA, 21 February 2010 (2010-02-21), pages 1527-1533, XP031649634, ISBN: 978-1-4244-4782-4
- KAKU B ET AL: "Switching loss minimised space vector PWM method for IGBT three-level inverter", IEE PROCEEDINGS: ELECTRIC POWER APPLICATIONS, INSTITUTION OF ELECTRICAL ENGINEERS, GB, vol. 144, no. 3, 13 May 1997 (1997-05-13), pages 182-190, XP006008606, ISSN: 1350-2352, DOI: 10.1049/IP-EPA:19970989
- BRUCKNER T ET AL: "Estimation and measurement of junction temperatures in a three-level voltage source converter", CONFERENCE RECORD OF THE 2005 IEEE INDUSTRY APPLICATIONS CONFERENCE FORTIETH IAS ANNUAL MEETING 2-6 OCT. 2005 KOWLOON, HONG KONG, CHINA, IEEE, CONFERENCE RECORD OF THE 2005 IEEE INDUSTRY APPLICATIONS CONFERENCE FORTIETH IAS ANNUAL MEETING (IEEE CAT., vol. 1, 2 October 2005 (2005-10-02), pages 106-114, XP010844237, DOI: 10.1109/IAS.2005.1518299 ISBN: 978-0-7803-9208-3

## Description

### TECHNICAL FIELD

The present invention relates, inter alia, to a method for the determination of a control scheme for a neutral point clamped (NPC) voltage source converter (VSC) with at least 3 levels.

### PRIOR ART

Shunt active power filters are frequently used to minimize the harmonic disturbances created by non-linear loads as they improve the filtering efficiency, and also solve many issues arising with classical passive filters. In the design of such a system, special attention has to be paid to the load currents, which are intended to be compensated. Together with the modulation strategy employed, the load currents are the variables that determine the circulating current in the power devices of the selected Voltage Source Converter (VSC). Especially in 3-level NPC (Neutral Point Clamped) active filters, the commonly irregular load can lead to an uneven loss distribution in the semiconductors of a bridge leg. As in every converter, the losses in the most stressed device limit the switching frequency and the power capability, and a de-rating of the converter current can become mandatory to ensure long term-stability of the system.

The semiconductor chips assembled in a standard commercial 3-level NPC bridge leg module are mostly dimensioned and rated neglecting the loss distribution over the specific elements. In this manner, due to the issue of loss distribution, the use of these devices often results in an oversized design with expensive and weakly utilized semiconductor area. Additionally, modulation schemes used to enhance the system efficiency can contribute even more to the uneven loss distribution, increasing the difference of the operating temperature of the transistors and diodes inside the power module and/or broadening their thermal cycling. The thermal mismatch of components leads to induced thermal stresses on the materials within the module and thermo-mechanical damage could arise. Consequently, the design of 3-level NPC active filters becomes rather complex as the desired characteristics of high power density, efficiency and component reliability could counteract other.

Due to the unequal distribution of losses and mismatch of junction temperature distribution among the bridge-leg's semiconductors, in the special situation of high power converters, the use of NPC power modules normally results in low semiconductor utilization. In this way, the use of single semiconductor devices, rated differently, are more indicated to build the bridge-legs of the converter. NPC systems, employing single semiconductors similarly rated, usually have these devices installed in separate heat sinks, in order to achieve a good thermal decoupling of the individual components. Unfortunately, the use of different single semiconductors and/or separate heating sinks normally results in cost increases and bulky systems.

### SUMMARY OF THE INVENTION

In order to address the loss distribution issue of the conventional NPC active filters, while maintaining a high efficiency of the system, a space vector modulation scheme incorporating an optimal clamping of the phase is proposed. With no additional circuitry to the conventional NPC, for most of the typical industrial loads, it is shown that active filters employing standard commercial NPC bridge leg modules can have their losses well distributed over the chip dies, leading to only a small difference of their operating temperature. Herein also a suitable control concept capable of balancing the DC-link voltages and, to some extent, of maintaining the optimal clamping of the currents, is proposed.

In this proposal, depending on the current shape of the load compensated by the active filter the top and bottom DC-link capacitors are alternately loaded according to a carrier signal with 3 or 9 times the fundamental frequency of the grid. Especially for high frequency operation, a considerable reduction of losses can be achieved by clamping the bridge leg that is closing all upper or middle-leg switches in the bridge leg, which handles the highest current values. Increasing the frequency of the clamping carrier and avoiding that the switching intervals match the instant of high current values can effect a better controllability of the loss distribution among the bridge leg components. Note that both clamping strategies are intended to balance the operating junction temperatures and/or the power losses across the transistors (Integrated Gated Bipolar Transistors IGBTs), while the total losses of the system are minimized. Accordingly, mainly the operating switching frequency needs to be strategically selected. In fact, the loss distribution across the components of a bridge leg is strongly dependent on the switching frequency and DC-link voltage operation. These variables are proportional to the switching losses, and they can be used together with the current clamping scheme to optimally design the active filter for a specific semiconductor technology and compensated load.

The synchronization of the carrier modulator with the grid voltages or load currents is important to perform the clamping during the desired non-switching intervals. The optimal current clamping can be previously defined by an accurate analysis of the necessarily known load currents. In cases where the displacement of the load current varies considerably with the handled power, a look-up table can be built to tune the carrier according to the instant power processed by the load. In cases where the load is unknown, the clamping strategy can be adapted during operation with an algorithm, which predicts the losses across the transistors of one phase leg. The calculation needs to incorporate the space vector modulation such that the impact of the current clamping pattern is considered correctly according to the compensated load. With the defined modulation index, the relative on-times/transitions of the discrete voltage space vectors can be determined. Thus, combining this information with the known conduction/switching loss characteristics of the employed semiconductors, the averaged conduction and switching losses over one switching period can be calculated. By storing the loss data calculated in each switching period, the mean losses over a fundamental grid period in each transistor device can be obtained recursively. Finally, after every switching period, adjustments of the variables, directly related to component losses, can be performed in order to equalize power losses in these devices (switching frequency, fs, DC-link voltage reference, uDC_ref, clamping pattern's duty cycle, D, and phase, ϕ).

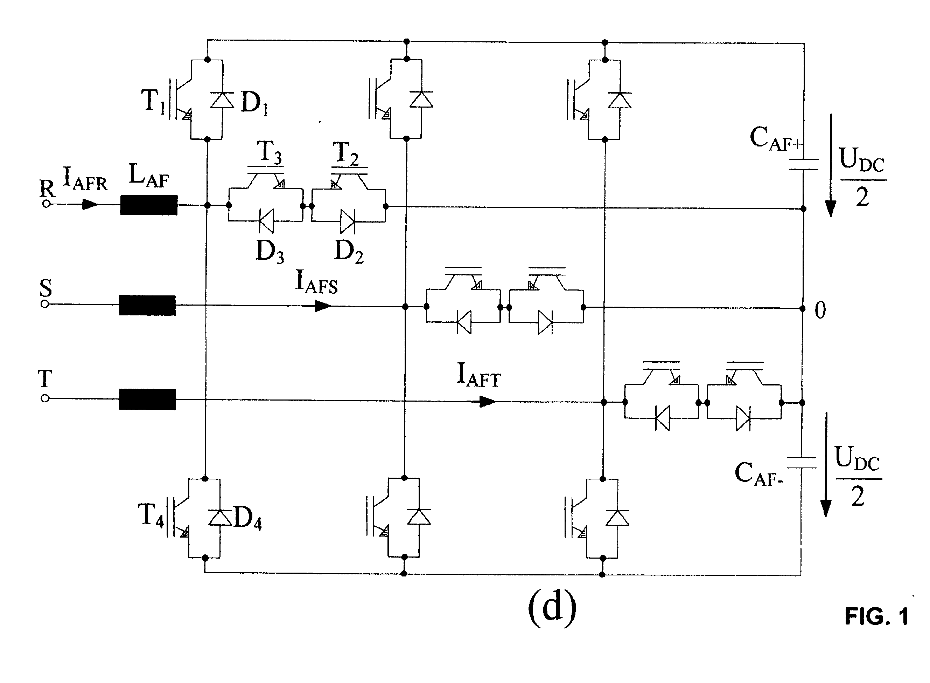

The proposed clamping scheme can be used in other 3-level VSC topologies, such as the T-type VSC as depicted for example in Fig. 1(d).

Operation conditions, such as, under strongly irregular loads, unbalanced DC-link voltages, or during loading variations, could make the equalization of power losses impossible, that is, not only among the bridge leg's components but also between different phase legs. This is particularly true because the variables, which constitute the degree of freedom of the proposed modulation, are commonly limited to the application requirements (switching frequency, fs, DC-link voltage, UDC, semiconductor technology, and the clamping pattern). Additionally, the current waveforms in each phase of the 3-level active filter VSC are necessarily similar; otherwise, the power losses among the different phases will differ. Finally, during unbalanced DC-link voltage conditions, the desired clamping of the phase current cannot be always attained due to the required control of the neutral point potential.

Specifically the present invention relates to a method as claimed in claim 1 and to the use of this method as claimed in claim 11. Basically the proposed method for the determination of control scheme of a voltage source converter, which is neutral point clamped entails at least the following steps:
- Positioning of a window of 120° within the phase cycle of the grid/load such as to be positioned around the centre peak maximum of the negative half wave and the positive half wave of the grid/load. This window defines the time span within which clamping of the corresponding leg can be allowed.
- Determining the frequency of the clamping carrier modulator to either be three times the basic frequency of the grid/load (third harmonic) or nine times the basic frequency of the grid/load (ninth harmonic). This determination can be based on visual inspection of the waveform of the grid/load or it can be based on an analysis of the waveform. The higher the frequencies of distortions and the more distortions the more likely the higher clamping carrier modulator frequency has to be chosen. It can also be based on a simulation or an actual measurement as will be detailed further below. ● Once the window and the frequency of the clamping carrier modulator is determined, the voltage source converter is operated under additional control of the clamping carrier modulator in that, depending on the on/off status of the clamping carrier modulator, the switching in the corresponding leg is interrupted so the corresponding leg is clamped- this however only if within the above-mentioned window. For if the clamping carrier modulator of the corresponding leg is essentially ignored outside of the above-mentioned window, the above-mentioned window is used for switching on/off the clamping. For additional optimization, it is now possible (but not necessary) to adapt further operating parameters in particular the phase shift of the clamping carrier modulator with respect to the grid/load. The clamping carrier modulator needs to be synchronized to the grid/load, and the relative phase can be used for optimization, wherein the optimization is carried out to lead to an optimum balance and a total loss as low as possible. Further parameters, which can be adapted in this optional step, will be specified below.

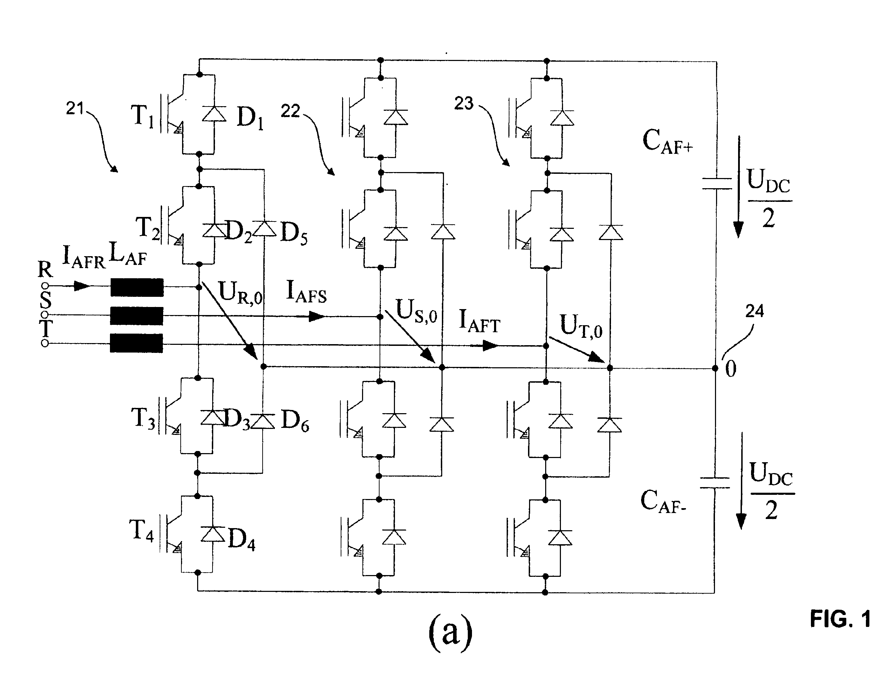

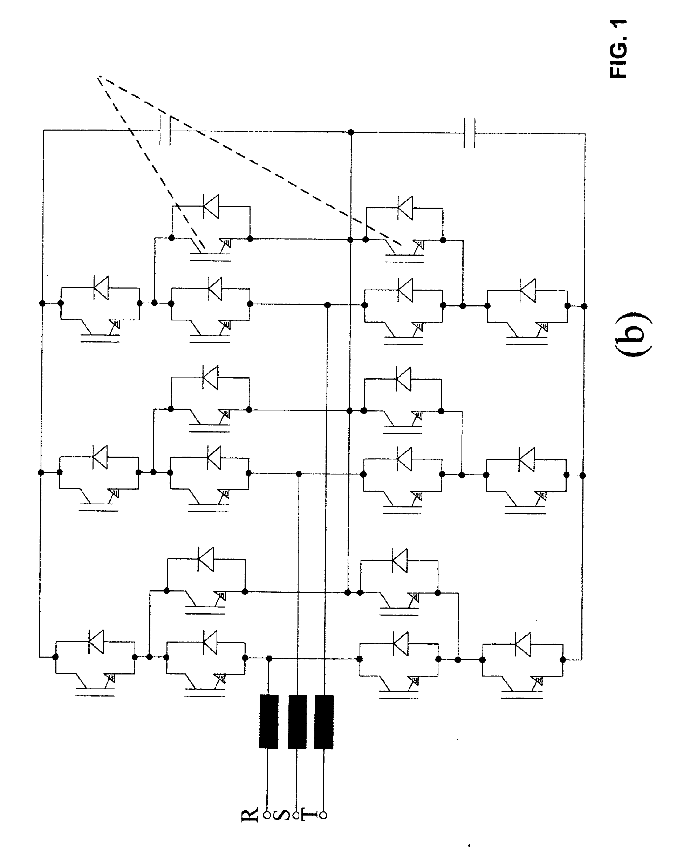

More specifically, the present invention relates to a method for the determination of a control scheme for a neutral point clamped (NPC) voltage source converter (VSC), typically with 3 phases, and with at least 3 levels, in particular as a shunt active power filter, with a topology of three bridge legs between each of three phases of a grid and a neutral point, each leg comprising at least four active switches. Particular topologies are to be controlled as illustrated in figures 1a, b, and d.

According to the invention, there is provided a clamping carrier modulator synchronized with the grid for the control of no-switching intervals, said method comprising at least the following steps:
i) analyzing the waveform of the grid and/or a load voltage (ILR) and determination of windows (3) of 120° within the voltage cycle of the grid/load, wherein the windows are centered around the positive and negative peak maximum of the grid/load voltage waveform, said windows defining the allowed period for no-switching of the corresponding bridge leg;
ii) operating or simulating the operation of the voltage source converter with a clamping carrier modulator frequency equal to the third harmonic frequency of the grid/load, wherein, if within said window, as a function of the clamping carrier modulator the switching of the corresponding bridge leg is interrupted and clamped, and then analyzing the balance in the operating junction temperatures and/or power losses across the active switches and also analyzing the total losses of the voltage source converter;
iii) operating or simulating the operation of the voltage source converter with a clamping carrier modulator frequency equal to the ninth harmonic frequency of the grid/load, wherein, if within said window, as a function of the clamping carrier modulator the switching of the corresponding bridge leg is interrupted and clamped, and then analyzing the balance in the operating junction temperatures and/or power losses across the active switches and the total losses of the voltage source converter;
iv) comparing the balance and the total losses of steps ii) and iii) and selecting either the clamping carrier modulator frequency according to step ii) or step iii) showing, as primary criterion, the better balance and, as secondary criterion, the lower total losses;
v) operating or simulating the operation of the voltage source converter with the selected clamping carrier modulator frequency, wherein as a function of the clamping carrier modulator the switching of the corresponding bridge leg is interrupted and clamped in as far as within said window, while iteratively changing at least one of the following operating parameters of the voltage source converter: switching frequency, DC-link voltage reference, duty cycle of clamping carrier modulator, phase shift of the clamping carrier modulator relative to the grid, and optimizing the balance in the operating junction temperatures and/or power losses across the active switches and the total losses of the voltage source converter as a function of the adjustment of these operating parameters;
until reaching optimum operation parameters for the control scheme.

According to a first preferred embodiment of the proposed method within step v) initially the phase shift of the clamping carrier modulator relative to the grid/load is, preferably systematically and/or iteratively, adapted to find the optimum balance and/or total loss of the voltage source converter.

According to yet another preferred embodiment, the voltage source converter is adapted to act as a shunt voltage source converter.

For compensation of imbalances of the DC-link voltage the ratio of no switching to switching intervals within the window (3) between the positive half wave and the negative half wave of the grid can be unbalanced.

The bandwidth of the current controller (G(s)) used in a corresponding DQ-frame based control concept is preferably selected to be at least 20 times, preferably at least 50 times higher than for the main DC link voltage controller (H(s)). The bandwidth of the partial DC link voltage controller (R(s)) is selected as at least less than one third, preferably at least less than one fifth of the main voltage loop.

The voltage source converter can be a 3-level T- type VSC converter or 3-level A-NPC VSC converter.

The present invention furthermore relates to a method of operating a voltage source converter, in particular a shunt active power filter, using a control scheme as determined as outlined above.

Preferably the converter is operated at a voltage in the range of 300-10000 V, preferably in the range of 500- 1500V or 700-1000 V.

Preferably the converter is operated using a switching frequency in the range of 100 Hz-1 MHz, preferably in the range of 5 kHz-100 kHz.

Furthermore the present invention relates to the use of a method as outlined above for the determination of the control scheme of 3-level VSC adapted to act as a photovoltaic grid inverter, a rectifier, or a motor drive.

Further embodiments of the invention are set forth in the dependent claims.

### BRIEF DESCRIPTION OF THE DRAWINGS

Preferred embodiments of the invention are described in the following with reference to the drawings, which are for the purpose of illustrating the present preferred embodiments of the invention and not for the purpose of limiting the same. In the drawings,
- Fig. 1: shows active filters based on: (a) Conventional 3-level NPC VSC; (b) 3-level A-NPC VSC; (c) 2-level VSC; and (d) 3-level T-type converter;
- Fig. 2: shows 3-level active filter modulation schemes: (a) clamping strategy with 3rd harmonic frequency carrier; (b) clamping strategy with 9th harmonic frequency carrier; and (c) clamping strategy during imbalanced DC-link capacitor voltages with 9th harmonic frequency carrier;
- Fig. 3: shows the active filter control strategy based on DQ-frame theory;
- Fig. 4: shows a partial DC-link voltage control scheme: (a) balanced condition; (b) light imbalanced DC-link voltages, partially preserving clamping; and (c) high voltage imbalances requiring hysteresis control;
- Fig. 5: shows the bridge leg components loss distribution: (a) conventional sinusoidal pulse width modulation SPWM; (b) clamping strategy with 3rd harmonic frequency carrier; and (c) clamping strategy with 9th harmonic frequency carrier, in each case solid black bars 12 indicate switching losses (40kHz) and hatched bars 13 indicate conduction losses;
- Fig. 6: shows the bridge leg components operating junction temperature: (a) conventional SPWM; (b) clamping strategy with 3rd harmonic frequency carrier; and (c) clamping strategy with 9th harmonic frequency carrier;
- Fig. 7: shows an efficiency comparison between the different topologies of 12kVAr active filters employing commercial semiconductors: (a) clamping strategy with 3rd harmonic frequency carrier; and (b) clamping strategy with 9th harmonic frequency pattern; and
- Fig. 8: shows the bridge leg components loss distribution for: (a) 3-level NPC, and (b) T-type active filter operating at 40kHz with 3rd harmonic clamping pattern; and (c) 3-level T-type active filter operating at 8kHz with 9th harmonic clamping pattern, in each case solid black bars 12 indicate switching losses (40kHz) and hatched bars 13 indicate conduction losses.

### DESCRIPTION OF PREFERRED EMBODIMENTS

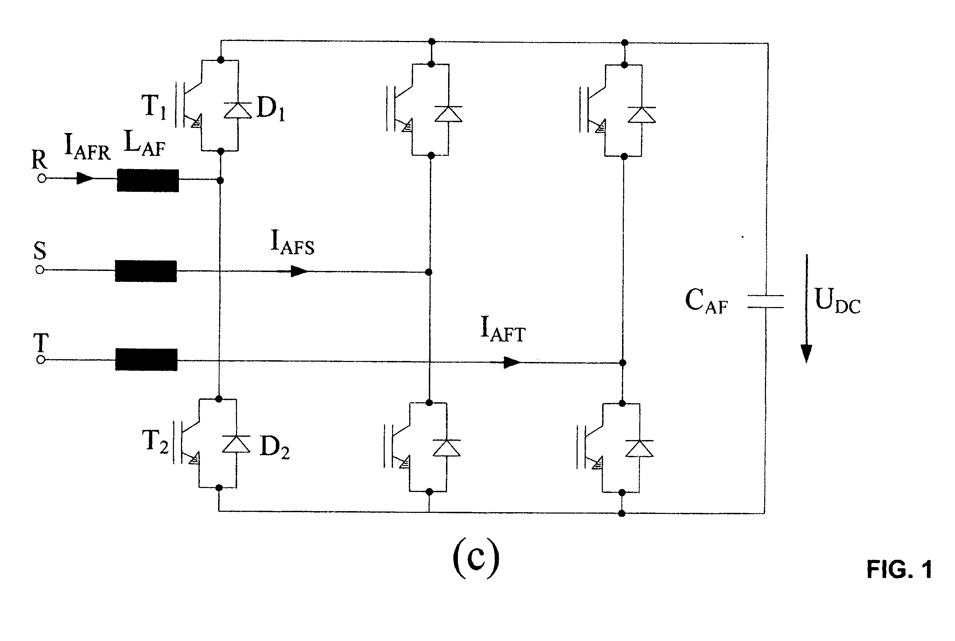

The 3-level NPC topology as e.g. shown in Fig. 1(a) is most often used in the medium voltage range applications. NPC VSC is an alternative for low-voltage applications. Compared to a 2-level VSC (cf. Fig. 1(c)), the 3-level NPC VSC features two additional active switches, two additional isolated gate drivers, and four diodes per phase leg. The 3-phase NPC VSC allows 27 switch states in the space-vector diagram, whereas the 2-level allows only eight switch states. Hence, the superior controllability of the phase currents and DC-link voltage (UDC) is distinctly advantageous over the 2-level converter. Additionally, in applications such as photovoltaic grid inverters, rectifiers, motor drivers and active filters, 3-level NPC systems can achieve lower losses than conventional 2-level converters if the considered switching frequency is high enough.

Adding up two extra active switches per phase leg of the conventional NPC a substantial improvement of loss distribution can be achieved with the additional switching states and new commutations possibilities incorporated (cf. Fig. 1(b)). This configuration, Active NPC (A-NPC), allows a specific utilization of the upper and lower path of the neutral tap and, thus, affects the distribution of conduction and switching losses. When compared to a conventional 3-phase 3-level NPC topology, the 3-phase 3-level A-NPC requires 6 additional active switches and 3 extra isolated gate drivers. Therefore, the main factors preventing the 3-level A-NPC VSC from being successful in the active filter market are the substantial increase of costs and complexity. Note that, when compared to the conventional 2-level VSC (cf. Fig. 1(c)), which is widespread in commercial systems, the A-NPC requires 12 extra active switches and isolated gate drives.

One disadvantage of the 3-level topologies is the active control of their neutral-point potential. Although under ideal condition, the DC-link capacitor voltages naturally balance over one fundamental cycle, asymmetries in the semiconductor characteristics, different gate delay time, dynamic load changes, and/or unbalanced loads can cause a steady drift of the neutral-point potential. Since the 3-level topology offers redundant space vectors on the inner hexagon of the space vector diagram, it is possible to maintain the stability of the neutral point potential with no additional circuitry and no additional switching transitions. Especially in 3-level active filters, the commonly irregular load can lead to an uneven loss distribution in the semiconductors of a bridge leg. As in every converter. the losses in the most stressed device limit the switching frequency and the power capability, a de-rating of the converter current can become mandatory to ensure long term-stability of the system. The semiconductor chips assembled in a standard commercial 3-level bridge leg module are mostly dimensioned and rated neglecting the loss distribution over the specific elements. In this manner, due to the issue of loss distribution, the use of these devices often results in an oversized design with expensive and weakly utilized semiconductor area. Additionally to that, modulation schemes used to enhance the system efficiency can contribute even more to the uneven loss distribution, increasing the difference of the operating temperature of the transistors and diodes inside the power module and/or broadening their thermal cycling. The thermal mismatch of components leads to induced thermal stresses on the materials within the module and thermo-mechanical damage could arise. Consequently, the design of 3-level active filters becomes rather complex as the desired characteristics of high power density, efficiency and component reliability could counteract each other.

In order to address the loss distribution issue of the 3-level VSCs, a space vector modulation scheme incorporating an optimal clamping of the phase is proposed. This strategy can maximize the efficiency of the system and/or to improve the distribution of the component losses, where the variation of power/thermal stress of the individual elements in a bridge leg is minimized. Additionally, a suitable control concept capable of balancing the DC-link voltages and, to some extent, maintain the optimal clamping of the currents, is disclosed.

For the converters presented herein, a space vector modulation scheme incorporating an optimal clamping of the phase, as described in B. Kaku, I. Miyashita, and S. Sone, "Switching loss minimized space vector pwm method for igbt three-level inverter," IEEE Proceedings. Electric Power Applications, Vol. 144, pp. 182-190, May 1997, is implemented. The output voltage vector is always formed with the three closest discrete voltage space vectors. Since the 3-level topology offers redundant space vectors on the inner hexagon, it is possible to implement an optimal clamping strategy in order to reduce switching losses.

In the disclosed modulation scheme, each phase leg of a 3-level VSC can have its switching operation stopped for 120 degrees in one period without degrading the performance of the system. When aiming for high efficiency during high operating frequency, one would naturally avoid switching the phase leg with the highest current values, while keeping the loss distribution among the phase legs of the converter symmetric. However, during this process the commonly irregular currents of the active filter can lead to a strongly uneven power loss distribution across the semiconductors of a bridge leg. In cases where standard commercial power modules are used, the loss distribution issue can increase the difference of the operating temperature of the transistor and diodes inside this device and/or broadening their thermal profile, thereby directly improving the reliability of these components.

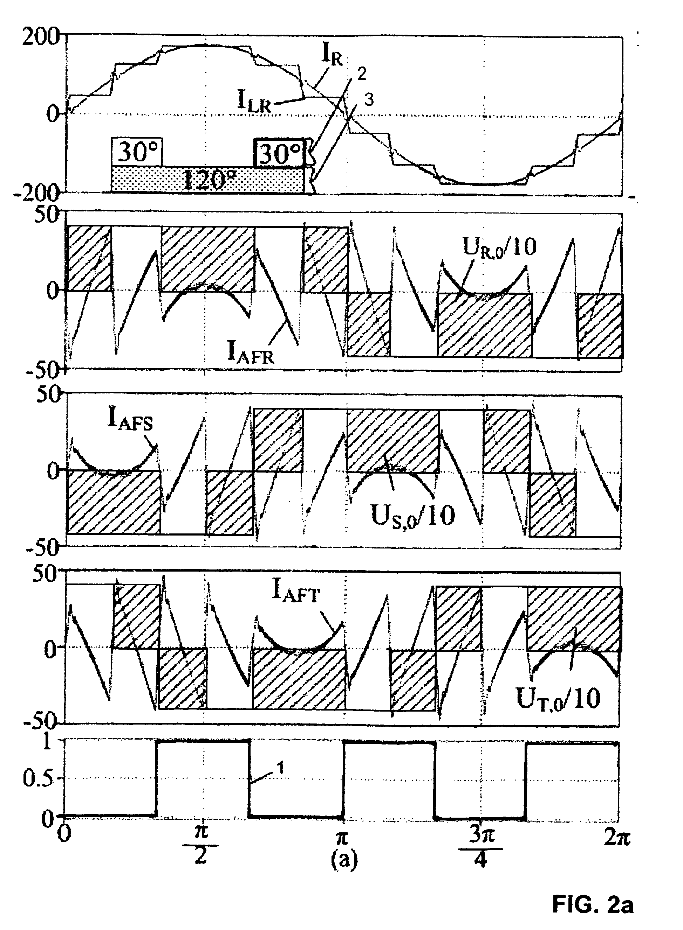

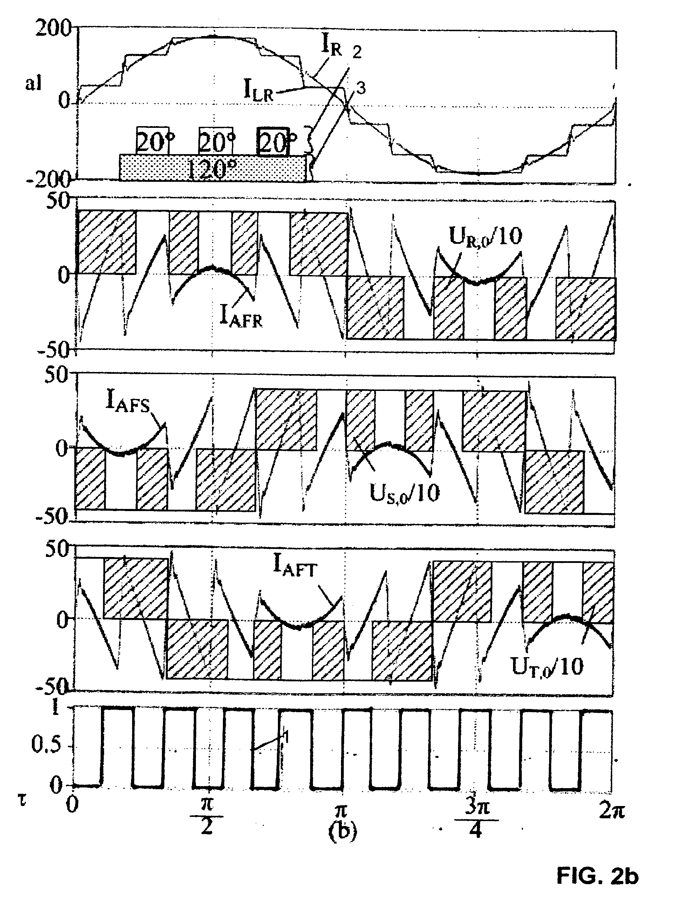

Herein, depending on the current shape of the load compensated by the active filter the top and bottom DC-link capacitors are alternately loaded according to a carrier signal with 3 or 9 times the fundamental frequency of the grid. Fig. 2(a) and 2(b) show both modulation strategies adjusted for a 3-phase 12-pulse diode rectifier with constant output current as load. Therein, especially for high frequency operation, a considerable reduction of losses would be achieved by clamping the bridge leg, which handles the highest current values (cf. Fig. 2(a)). By increasing the frequency of the clamping process and avoiding that the switching intervals match the instant of high current values, a better controllability of the loss distribution among the bridge leg components can be obtained (cf. Fig. 2(b)).

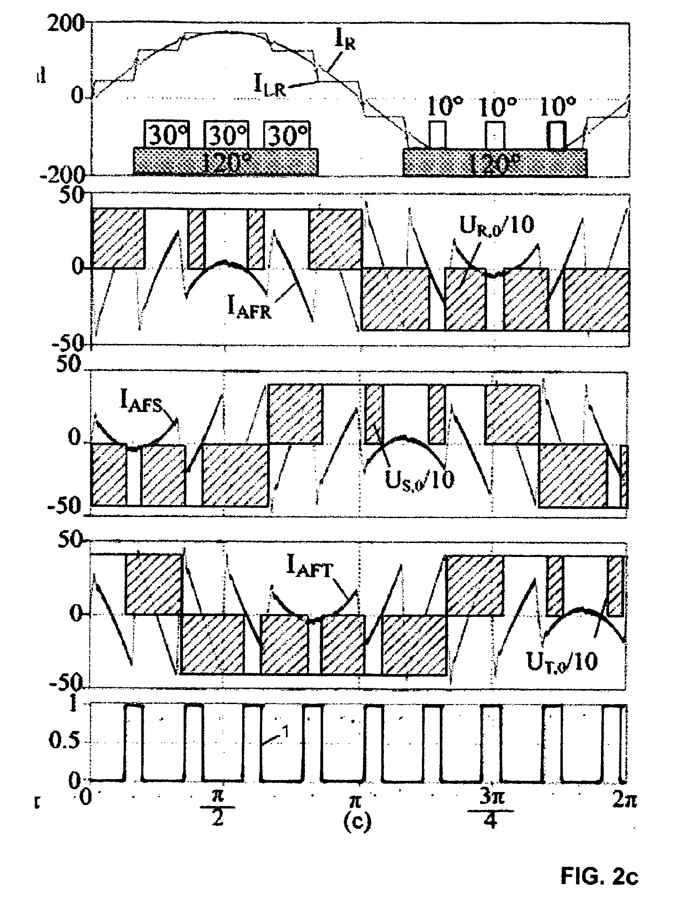

The figures 2, top row, show the above-mentioned window 3, within which no switching is allowed, and which is centered around the maximum of the positive half wave and the negative half wave (in a) and b) only the window for the positive half wave is indicated). In the figure, I_{LR} represents the load current and I_{R} represents the compensated current. Non-switching, i.e. clamping of the corresponding leg, is allowed only within the window 3, depending on the switching state of the modulation carrier 3. This is illustrated in the bottom row of figure 2. Outside of the window 3 the modulation carrier 1 is essentially ignored. If the carrier 1 is on zero level and if one is within window 3 clamping is allowed, as indicated graphically by the actual no switching intervals 2. Depending on the phase shift between the modulator 1 and the grid, the corresponding blocks are shifted. For example, if in the left column of figure 2 the carrier is shifted by 5° relative to the grid, one of the intervals 2 will become 35°, and the other one will become 25°. The phase shift can be used for optimization of the balance. In the central column of figure 2 shifting the phase of the modulator will only lead to a corresponding shifting of the three 20° intervals until one of them reaches the end of the 120° window. The same holds true for the example in the rightmost column figure 2. The latter example shows how it is possible to adjust imbalances in the DC link by differentiating between the clamping in the positive half wave and in the negative half wave.

The same modulation carrier is used for all three phases. For symmetry reasons the three phases R (second row), S (third row) and T (fourth row) are only shifted by 120° relative to each other as concerns the compensated current I_{AFR} as well as the voltage U_{R,0}. The hatched areas indicate the timespans within which the switching takes place.

Note that both clamping strategies are intended to balance the operating junction temperatures and/or the power losses across the transistors (IGBTs), while the total losses of the system are minimized. Accordingly, mainly the operating switching frequency needs to be strategically selected. In fact, the loss distribution across the components of a bridge leg is strongly dependent on the switching frequency and DC-link voltage operation. These variables are proportional to the switching losses, and they can be used together with the current clamping scheme to optimally design the active filter for a specific semiconductor technology and compensated load.

In order to keep the balancing of the DC-link capacitor voltages unaltered and the loss distribution among the phase legs of the converter symmetric over one fundamental cycle, a proper selection of the redundant zero vectors are required. This condition is found when the duty cycle (D) of the carrier is set to 50%. Any other duty cycle value produces an asymmetric modulation. It can be used for the balancing control of the DC-link capacitor voltages as shown in Fig. 2(c). For D > 50%, the upper DC-link capacitor is charged while the bottom capacitor is discharged. When D <50%, the capacitor charging cycle is changed.

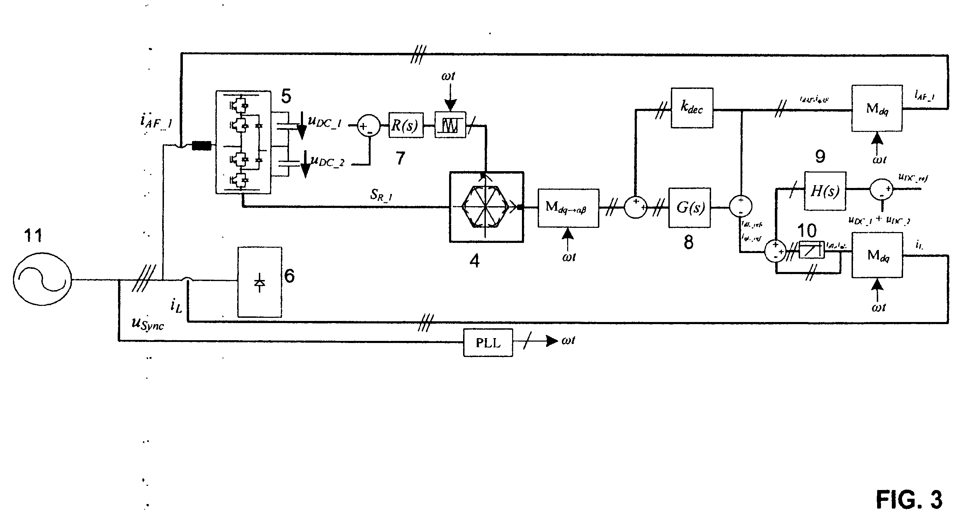

The DQ-Frame based control concept suitable for the 3-level active filters considered here is shown in Fig. 3. It consists of a fast current control loop and a slow voltage loop. Additionally, there is a partial DC-link voltage control, which acts to balance the DC-link capacitor voltages. Other strategies, such as PQ theory, Fryze currents, generalized integrators, frequency domain strategies (DFT, RDFT and FFT), etc., can also be employed.

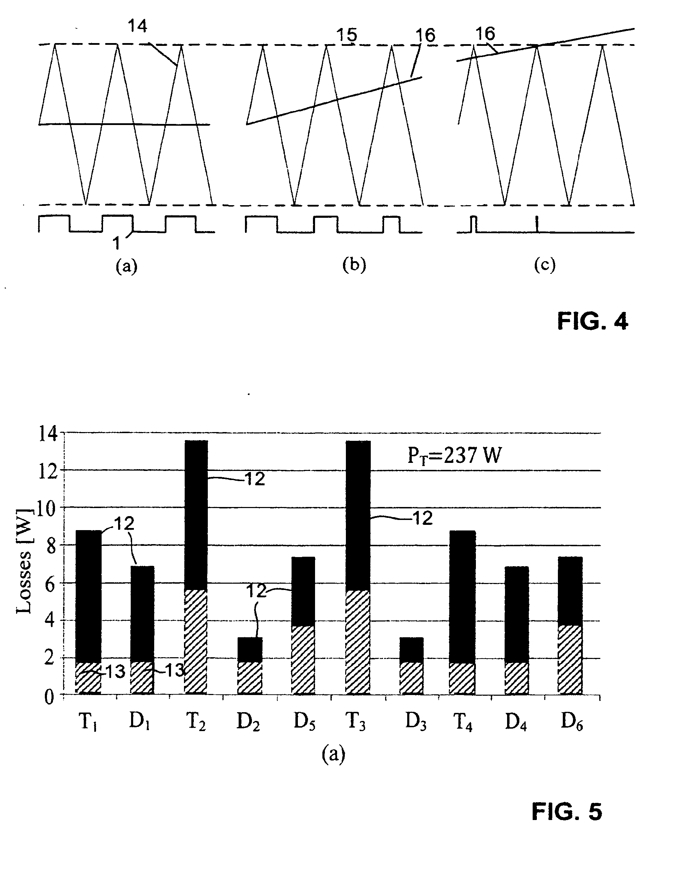

In order to obtain a good controllability of the active filter currents, the current controller (G(s)) bandwidth is selected as fifty times higher than for the main DC-link voltage controller (H(s)). Therein, a high voltage control error occurring due to the small controller gain can be prevented by increasing the controller gain proportionally to the error signal. In order to maintain the optimal clamping of the currents to some extent during imbalances of the DC-link voltages, the bandwidth of the partial DC-link voltage controller (R(s)) is selected as one fifth (1/5) of the main voltage loop. A non-linear control combining hysteresis and linear concepts is employed as shown in Fig. 4. For low voltage imbalances, the output signal of the R(s) controller is compared to a PWM modulator with 3 or 9 times the mains frequency. This determines the carrier duty cycle that selects one of the redundant zero vectors on the inner hexagon of the space vector modulation scheme. For high voltage imbalances, the modulator saturates and a hysteresis-like control takes over. High values for the DC-link capacitors are desired for the voltage variations, avoiding then the operation of the hysteresis control.

The synchronization of the carrier modulator with the grid voltages or load currents is essential to perform the clamping during the desired non-switching intervals. The optimal current clamping may be defined previously by an accurate analysis of the necessarily known load currents. In cases where the displacement of the load current varies considerably with the handled power, a look-up table can be built to tune the carrier according to the instant power processed by the load. In cases where the load is unknown, the clamping strategy could be adapted during operation with an algorithm, which predicts the losses across the transistors of one phase leg. The calculation incorporates the space vector modulation such that the impact of the current clamping pattern is considered correctly according to the compensated load. With the defined modulation index, the relative on-times/transitions of the discrete voltage space vectors can be determined. Thus, combining this information with the known conduction/switching loss characteristics of the employed semiconductors, the averaged conduction and switching losses over one switching period can be calculated. By storing the loss data calculated in each switching period, the mean losses over a fundamental grid period in each transistor device can be obtained recursively. Finally, after every switching period, adjustments on the variables, directly related to component losses, can be performed in order to equalize power losses in these devices (switching frequency, fs, DC-link voltage reference, uDC_ref, clamping pattern's duty cycle, D, and phase, ϕ).

In order to quantify the feasibility of the proposed loss minimized space vector modulation, simulations are performed for a 3-phase 3-level NPC active filter rated to 12 kVAr. This system operates with a 230Vrms/50Hz grid voltage at 30 kHz switching frequency and 800V DC-link. The 3-level Trench and Field Stop IGBT power module F3L50R06W1E3_B11 is selected and its loss characteristics and thermal models are obtained directly in the datasheet. The loss analyses are performed for nominal operation of the active filter with a 3-phase 12-pulse diode rectifier with constant output current as load. For comparative purposes, three modulation schemes are analyzed: the conventional SPWM method, in which there is no reduction of switching control; and the two clamping strategies proposed, one guided by a carrier signal with 3 (cf. Fig. 2(a)) and other with 9 (cf. Fig. 2(b)) times the fundamental frequency of the grid.

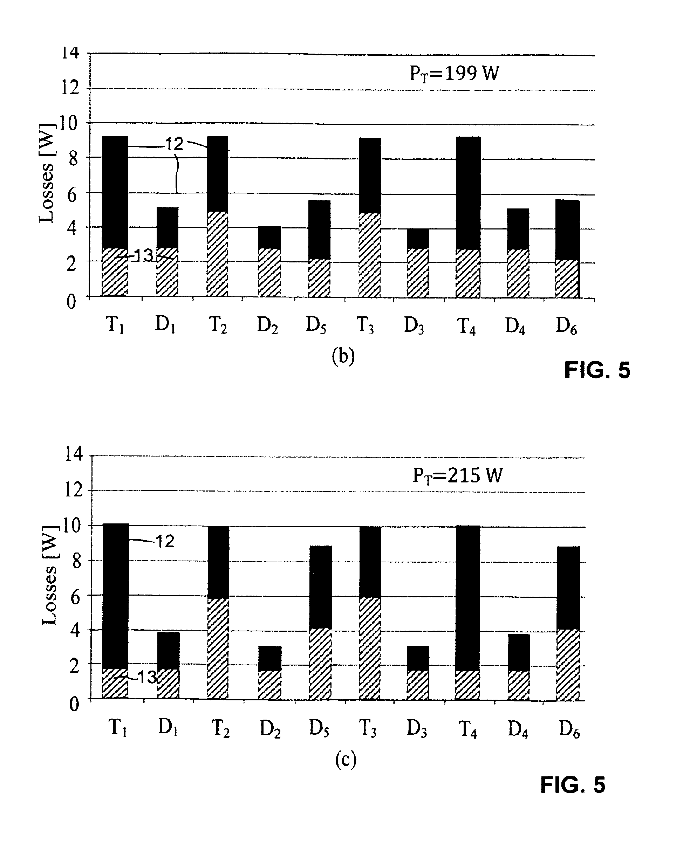

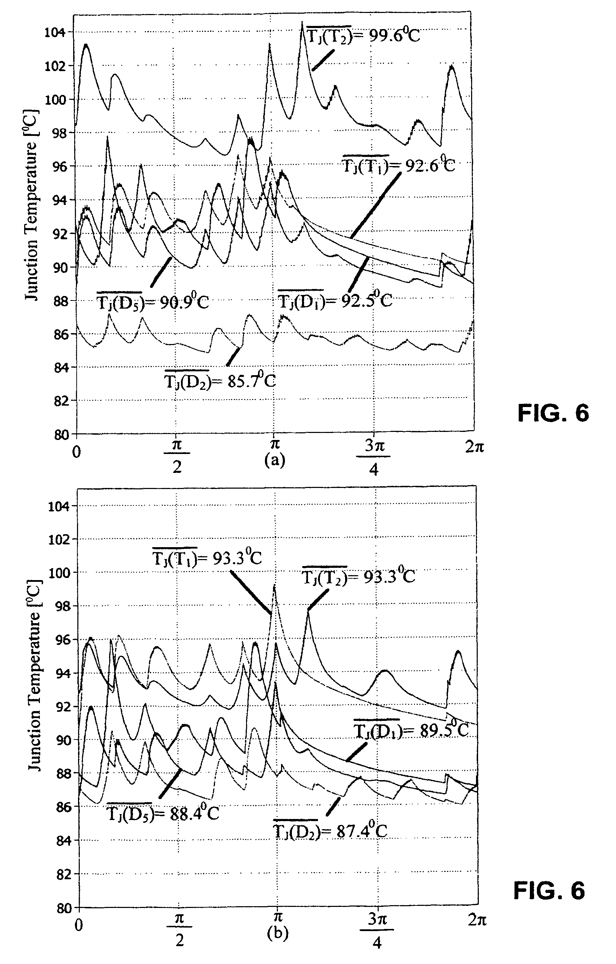

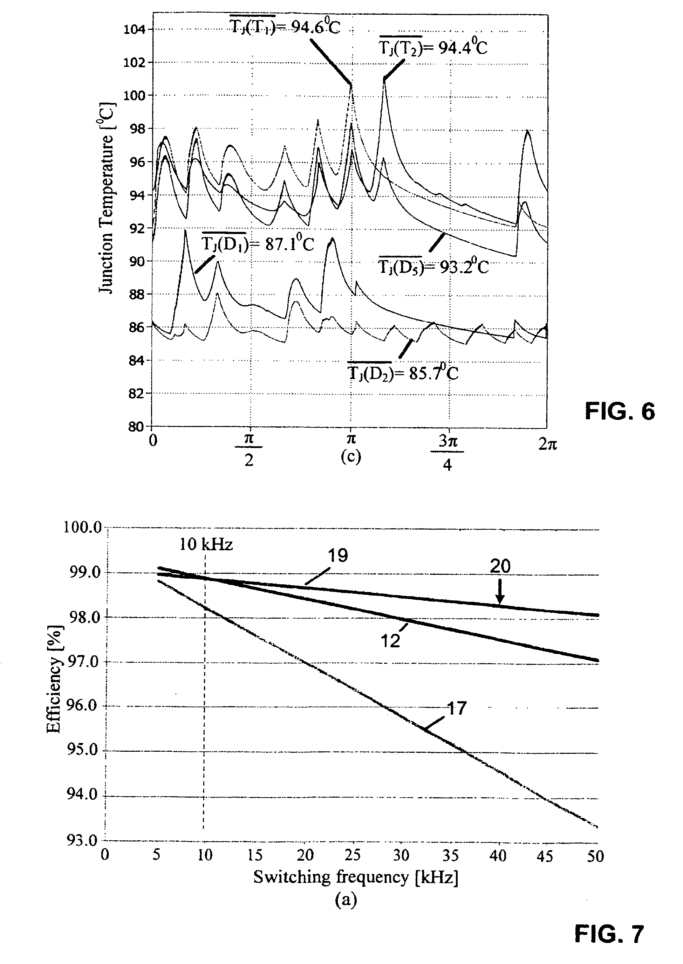

The resulting averaged power loss distribution and the operating junction temperature (TJ) of the individual elements in a bridge leg are shown in Fig. 5 and Fig. 6, respectively. In Fig. 6 a constant heat sink temperature (THS) of 80°C is considered in the analysis. The system operating with SPWM modulation results in the lowest efficiency, as a total semiconductor loss (PT) of 237W exists (79W per power module). By avoiding switching currents with high values, the clamping strategies guided by a signal with a 3rd and 9th harmonic pattern obtain a loss reduction of 16% and 9.3%, respectively. Additionally, the operating junction temperatures of the upper/bottom and inner IGBTs or diodes are well balanced and symmetric for all bridge legs (cf. Fig 6(b)).

The proposed clamping strategies are intended to balance the operating junction temperatures and/or the power losses across the IGBTs, while the total losses of the system are minimized. Accordingly, for the disclosed example, the operating switching frequency was strategically selected with the aim that for both proposed modulation schemes these goals could be successfully attained. In fact, the loss distribution across the components of a bridge leg is strongly dependent on the switching frequency and DC-link voltage operation. These variables are proportional to the switching losses and they can be used together with the current clamping scheme to optimally design the active filter for a specific semiconductor technology.

Note that the proposed clamping scheme can be used to other 3-level VSC topologies, such as the T-type VSC depicted in Fig. 1(d). In the following section, suitable shunt active filters derived from the 2-level VSC, the 3-level NPC and the T-type converter are presented. An efficiency comparison between these converters employing the proposed space vector modulation scheme incorporating an optimal clamping of the phase is shown, for operation in the switching frequency range of 5kH to 50kHz and low DC-link voltage level (U_{DC}=800V). A 3-phase 12-pulse diode rectifier with constant output current is considered in the loss analyses with switching loss measurements of commercial semiconductors obtained in a test setup.

A calculation of the efficiency of 2-level and 3-level active filters allowed a comparison between the efficiency of a 12kVAr rated 3-phase shunt active filters derived from the 2-level VSC, the 3-level NPC, and a T-type converter. A 3-phase 12-pulse diode rectifier was considered as load in the loss analyses with switching loss measurements of commercial semiconductors obtained on the test setup.

For an accurate analysis of the switching losses, the information from the datasheets alone would not be enough to enable a fair comparison of the studied systems. Due to the mismatch of voltage rated devices in the T-type topology, the turn-on energy of the 1200V IGBTs will be lower if the commutating diode is only 600V rated because of the considerably lower reverse recovery charge. In the same matter, the 600V device turn-on loss energy will be higher if the commutating diode is 1200V rated.

A calculation of the active filter topologies efficiency yielded that the efficiency of each active filter studied here, is determined with an algorithm similar to the one presented in M. Schweizer, T. Friedli, and J. W. Kolar, "Comparison and implementation of a 3-level npc voltage link back-to-back converter with sic and si diodes," in Proc. Twenty-Fifth Annual IEEE Applied Power Electronics Conf. and Exposition (APEC), pp. 1527-1533, 2010. The calculation incorporates the space vector modulation such that the impact of the optimal clamping is considered correctly according to the compensated load. With a defined modulation index, the relative on-times/transitions of the discrete voltage space vectors can be determined. Thus, the averaged conduction losses and the switching losses over one switching period can be calculated. Finally, the mean losses over a fundamental period in each device can be obtained by integrating the corresponding expressions over the full mains voltage period.

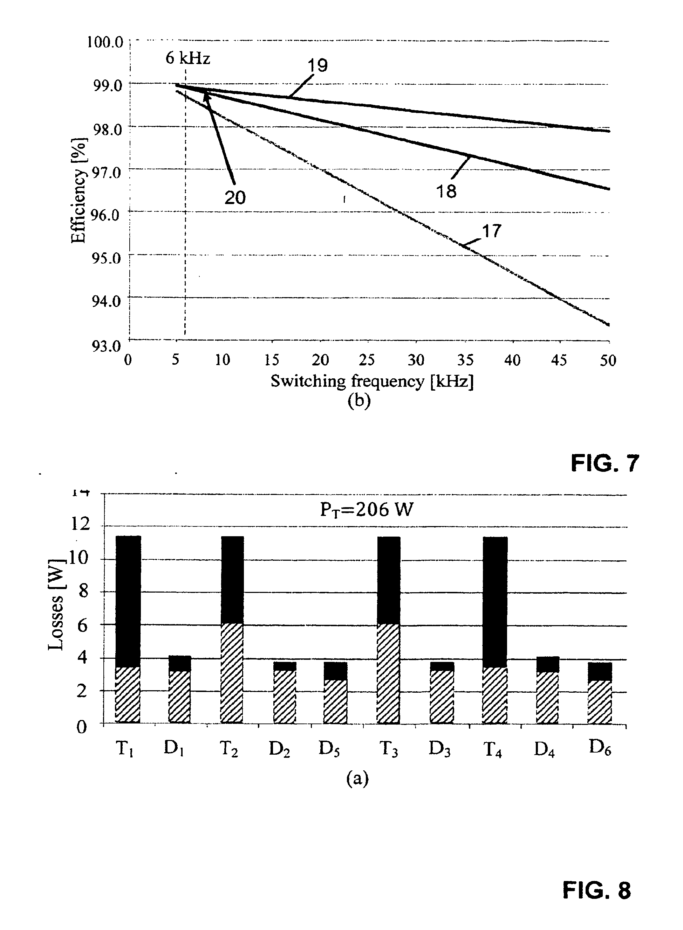

In Fig. 7 the pure semiconductor efficiency of 12 kVAr shunt active filters derived from the 2-level VSC, the 3-level NPC and the T-type converter is presented for operation in the switching frequency range of 5kH to 50kHz and low DC-link voltage level (U_{Dc}=800V). In this analysis the loss data of the commercial IGBTs IKW25T120 and the IKW30N60T obtained with the test setup are used for the comparison when a 3-phase 12-pulse diode rectifier with constant output current is considered as load. For the calculation of the 3-level T-type topology efficiency, the same algorithm accounting for the proposed space vector modulations as for the NPC converter is employed.

Due to the fact that the 1200V devices in the T-type active filter are mostly commuted at half DC-link voltage instead of the always 800V in the 2-level VSC, the switching losses are considerably reduced. Therefore, for low switching frequency values the 3-level T-type active filter already shows superior performance than the conventional 2-level version. Compared to the 3-level NPC topology, the T-type system has lower conduction losses, but higher switching losses. In this manner, in both clamping strategies the efficiency of the T-type converter is outstanding for up to 10 kHz switching frequency (cf. Fig 7). On the other hand, for switching frequencies above 10 kHz, the 3-level NPC topology is superior.

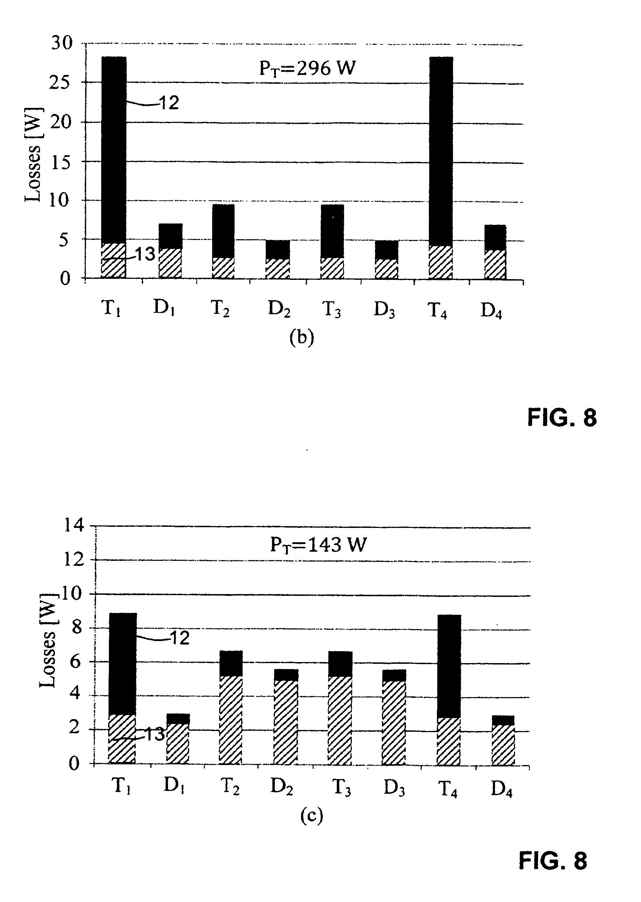

Fig. 8(a) and 8(b) show the bridge leg components mean power loss distribution for the 3-level NPC and the T-type active filters operating at 40 kHz switching frequency, respectively. As can be observed the overall switch utilization of the T-type active filter is extremely low. On the other hand, the 3-level NPC active filter achieves an outstanding performance, enabling that all semiconductor chips for IGBTs or diodes operate with similar junction temperatures. For the T-type VSC, the optimum switch utilization occurs at low switching frequency (8kHz) and, in the switching frequency range of 5kHz to 50kHz, it can only be reached by the clamping strategy with 9th harmonic pattern. Fig. 8(c) shows the T-type active filter performance for this operation.

The strategy proposed here was applied to 3-level active filters; however other industrial applications employing 3-level VSCs, such as photovoltaic grid inverters, rectifiers, motor drivers, among others can also take advantage of this concept. The modulation strategy presented here can also be combined with the active NPC (A-NPC) topology, in order to not only improve the loss distribution among the component of the phase leg, but also to enhance the efficiency of this system.

### LIST OF REFERENCE SIGNS

- 1: Clamping carrier, carrier modulator
- 2: actual no switching interval
- 3: possible no switching interval
- 4: space vector modulation
- 5: active filter
- 6: nonlinear load
- 7: partial voltage controller
- 8: current controller
- 9: voltage controller
- 10: low pass filter
- 11: grid
- 12: switching losses (30 kHz), solid black bars

- 13: conduction losses, hatched bars in Fig, 5
- 14: PWM modulator
- 15: hysteresis control level
- 16: control level
- 17: 2-level
- 18: 3-level T-type
- 19: 3-level NPC
- 20: balanced IGBT's Tj for 3-level NPC
- 21: bridge leg of R-phase
- 22: bridge leg of S- phase
- 23: bridge leg of T-phase
- 24: neutral point

## Claims

1. Method for the determination of a control scheme for a neutral point clamped (NPC) voltage source converter (VSC) with at least 3 levels, in particular as a shunt active power filter, with a topology of three bridge legs (21-23) between each of three phases (R,S,T) of a grid (11) and a neutral point (24), each leg (21-23) comprising at least four active switches (T1-T4),
wherein there is provided a clamping carrier modulator (1) synchronized with the grid (1) for the control of no-switching intervals,
said method comprising at least the following steps:
i) analyzing the waveform of the grid and/or a load voltage (I_{LR}) and determining windows (3) of 120° within the voltage cycle of the grid/load, wherein the windows (3) are centered around the positive and negative peak maximum of the grid/load voltage waveform, said windows (3) defining the allowed period for no-switching of the corresponding bridge leg;
ii) operating or simulating the operation of the voltage source converter with a clamping carrier modulator frequency equal to the third harmonic frequency of the grid/load, wherein, if within said window (3), as a function of the clamping carrier modulator the switching of the corresponding bridge leg is interrupted and clamped, then analyzing the balance in the operating junction temperatures and/or power losses across the active switches and analyzing the total losses of the voltage source converter;
iii) operating or simulating the operation of the voltage source converter with a clamping carrier modulator frequency equal to the ninth harmonic frequency of the grid/load, wherein, if within said window (3), as a function of the clamping carrier modulator the switching of the corresponding bridge leg is interrupted and clamped, then analyzing the balance in the operating junction temperatures and/or power losses across the active switches and the total losses of the voltage source converter;
iv) comparing the balance and the total losses of steps ii) and iii) and selecting either the clamping carrier modulator frequency according to step ii) or step iii) showing, as primary criterion, the better balance and, as secondary criterion, the lower total losses;
v) operating or simulating the operation of the voltage source converter with the selected clamping carrier modulator frequency, wherein as a function of the clamping carrier modulator the switching of the corresponding bridge leg is interrupted and clamped in as far as within said window (3), while iteratively changing at least one of the following operating parameters of the voltage source converter: switching frequency, DC-link voltage reference, duty cycle of clamping carrier modulator, phase shift of the clamping carrier modulator relative to the grid, and optimising the balance in the operating junction temperatures and/or power losses across the active switches and the total losses of the voltage source converter as a function of the adjustment of these operating parameters until reaching optimum operation parameters for the control scheme.

2. Method according to claim 1, wherein within step v) initially the phase shift of the clamping carrier modulator relative to the grid/load is iteratively adapted to find the optimum balance and/or total loss of the voltage source converter.

3. Method according to any of the preceding claims, wherein the voltage source converter is adapted to act as a shunt voltage source converter.

4. Method according to any of the preceding claims, wherein for compensation of imbalances of the DC-link voltage the ratio of no switching to switching intervals within the window (3) between the positive half wave and the negative half wave of the grid is unbalanced.

5. Method according to any of the preceding claims, wherein the bandwidth of the current controller (G (s)) is selected to be at least 5 times, preferably at least 20 times higher, or at least 50 times higher or approximately 50 times higher than for the main DC link voltage controller (H(s)).

6. Method according to any of the preceding claims, wherein the bandwidth of the partial DC link voltage controller (R(s)) is selected as at least less than one third, preferably at least less than one fifth of the main voltage loop.

7. Method according to any of the preceding claims, wherein the voltage source converter is a 3-level T- type VSC converter or 3-level A-NPC VSC converter.

8. Method of operating a voltage source converter, in particular a shunt active power filter, using a control scheme determined according to any of the preceding claims.

9. Method according to any of the preceding claims, wherein the converter DC-link voltage is operated at a voltage in the range of 300-10000 V, preferably in the range of 700-1000 V.

10. Method according to any of the preceding claims, wherein the converter is operated using a switching frequency in the range of 100 Hz-1 MHz, preferably in the range of 5 kHz-100 kHz.

11. Use of the method according to any of claims 1-7 for the determination of the control scheme of a 3-level VSC adapted to act as a photovoltaic grid inverter, a rectifier, or a motor drive.

## Patentansprüche

1. Verfahren zum Bestimmen eines Steuerschemas für einen NPC VSC (Neutral Point Clamped Voltage Source Converter) mit mindestens 3 Pegeln, insbesondere als ein Parallelleistungsfilter mit einer Topologie aus drei Brückenarmen (21-23) zwischen jeder von drei Phasen (R, S, T) eines Netzes (11) und einem Neutralpunkt (24), wobei jeder Arm (21-23) mindestens vier aktive Schalter (T1-T4) umfasst,
wobei dort ein klemmender Trägermodulator (1) vorgesehen ist, der mit dem Netz (1) für die Steuerung von Nicht-Schaltintervallen synchronisiert ist,
wobei das Verfahren mindestens die folgenden Schritte umfasst:
i) Analysieren der Wellenform der Netz- und/oder einer Lastspannung (I_{LR}) und Bestimmen von Fenstern (3) von 120° innerhalb des Spannungszyklus des Netzes/der Last, wobei die Fenster (3) um das positive und negative Spitzenmaximum der Netz-/Lastspannungswellenform zentriert sind, wobei die Fenster (3) die gestattete Periode für das Nicht-Schalten des entsprechenden Brückenarms definieren;
ii) Betätigen oder Simulieren der Operation des Spannungsquellenwandlers mit einer klemmenden Trägermodulatorfrequenz gleich der dritten Oberschwingungsfrequenz des Netzes/der Last, wobei, falls innerhalb des Fensters (3), wenn eine Funktion des klemmenden Trägermodulators das Schalten des entsprechenden Brückenarms unterbrochen und geklemmt wird, dann Analysieren des Ausgleichs bei den Sperrschichtbetriebstemperaturen und/oder Leistungsverlusten an den aktiven Schaltern und Analysieren der Gesamtverluste des Spannungsquellenwandlers;
iii) Betätigen oder Simulieren der Operation des Spannungsquellenwandlers mit einer klemmenden Trägermodulatorfrequenz gleich der neunten Oberschwingungsfrequenz des Netzes/der Last, wobei, falls innerhalb des Fensters (3), wenn eine Funktion des klemmenden Trägermodulators das Schalten des entsprechenden Brückenarms unterbrochen und geklemmt wird, dann Analysieren des Ausgleichs bei den Sperrschichtbetriebstemperaturen und/oder Leistungsverlusten an den aktiven Schaltern und der Gesamtverluste des Spannungsquellenwandlers;
iv) Vergleichen des Ausgleichs und der Gesamtverluste der Schritte ii) und iii) und Wählen entweder der klemmenden Trägermodulatorfrequenz gemäß Schritt ii) oder Schritt iii) wobei als primäres Kriterium der bessere Ausgleich und als sekundäres Kriterium die niedrigeren Gesamtverluste gezeigt werden;
v) Betätigen oder Simulieren der Operation des Spannungsquellenwandlers mit der gewählten klemmenden Trägermodulatorfrequenz, wobei als Funktion des klemmenden Trägermodulators das Schalten des entsprechenden Brückenarms unterbrochen wird und soweit innerhalb des Fensters (3) geklemmt wird, während iterativ mindestens einer der folgenden Arbeitsparameter des Spannungsquellenwandlers geändert wird: Schaltfrequenz, Zwischenkreisspannungsreferenz, Tastverhältnis des klemmenden Trägermodulators, Phasenverschiebung des klemmenden Trägermodulators relativ zum Netz und Optimieren des Ausgleichs bei den Sperrschichtarbeitstemperaturen und/oder Leistungsverlusten an den aktiven Schaltern und der Gesamtverluste des Spannungsquellenwandlers als Funktion der Einstellung dieser Arbeitsparameter, bis die optimalen Arbeitsparameter für das Steuerschema erreicht sind.

2. Verfahren nach Anspruch 1, wobei innerhalb Schritts v) anfänglich die Phasenverschiebung des klemmenden Trägermodulators relativ zum Netz/zur Last iterativ adaptiert wird, um den optimalen Ausgleich und/oder den Gesamtverlust des Spannungsquellenwandlers zu finden.

3. Verfahren nach einem der vorhergehenden Ansprüche, wobei der Spannungsquellenwandler ausgelegt ist zum Wirken als ein Parallelspannungsquellenwandler.

4. Verfahren nach einem der vorhergehenden Ansprüche, wobei für eine Kompensation von Ungleichgewichten der Zwischenkreisspannung das Verhältnis des Nicht-Schaltens zu Schaltintervallen innerhalb des Fensters (3) zwischen der positiven Halbwelle und der negativen Halbwelle des Netzes unausgeglichen ist.

5. Verfahren nach einem der vorhergehenden Ansprüche, wobei die Bandbreite des Stromcontrollers (G(s)) so gewählt wird, dass sie mindestens 5-mal, bevorzugt mindestens 20-mal höher oder mindestens 50-mal höher oder etwa 50-mal höher ist als für den Haupt-Zwischenkreisspannungscontroller (H(s)).

6. Verfahren nach einem der vorhergehenden Ansprüche, wobei die Bandbreite des partiellen Zwischenkreisspannungscontrollers (R(s)) so gewählt wird, dass sie mindestens ein Drittel, bevorzugt mindestens weniger als ein Fünftel, der Hauptspannungsschleife beträgt.

7. Verfahren nach einem der vorhergehenden Ansprüche, wobei der Spannungsquellenwandler ein 3-Level-VSC-Wandler vom T-Typ oder ein 3-Level-A-NPC-VSC-Wandler ist.

8. Verfahren zum Betreiben eines Spannungsquellenwandlers, insbesondere eines Parallelleistungsfilters, unter Verwendung eines gemäß einem der vorhergehenden Ansprüche bestimmten Steuerschemas.

9. Verfahren nach einem der vorhergehenden Ansprüche, wobei die Wandler-Zwischenkreisspannung mit einer Spannung im Bereich von 300-10000 V, bevorzugt im Bereich von 700-1000 V, betrieben wird.

10. Verfahren nach einem der vorhergehenden Ansprüche, wobei der Wandler unter Verwendung einer Schaltfrequenz im Bereich von 100 Hz-1 MHz, bevorzugt im Bereich von 5 kHz-100 kHz, betrieben wird.

11. Verwendung des Verfahrens nach einem der Ansprüche 1-7 für die Bestimmung des Steuerschemas eines 3-Level-VSC, der ausgelegt ist zum Wirken als ein Wandler für ein fotovoltaisches Netz, einen Gleichrichter oder einen Motorantrieb.

## Revendications

1. Procédé pour la détermination d'un schéma de contrôle pour un convertisseur de source de tension (VSC) à point neutre bloqué (NPC) ayant au moins 3 niveaux, en particulier comme filtre de puissance active de dérivation, avec une topologie à trois jambes de pont (21-23) entre chacune des trois phases (R, S, T) d'une grille (11) et un point neutre (24), chaque jambe (21-23) comprenant au moins quatre commutateurs actifs (T1-T4),
où un modulateur de blocage (1) synchronisé avec la grille (1) est fourni pour le contrôle d'intervalles de non-commutation,
ledit procédé comprenant au moins les étapes suivantes :
i) analyser la forme d'onde de la tension de la grille et/ou d'une charge (I_{LR}) et déterminer des fenêtres (3) de 120° dans le cycle de tension de la grille/charge, où les fenêtres (3) sont centrées autour du pic positif et négatif maximal de la forme d'onde de tension de la grille/charge, lesdites fenêtres (3) définissant la période autorisée pour une non-commutation de la jambe de pont correspondante ;
ii) mettre en oeuvre ou simuler le fonctionnement du convertisseur de source de tension avec une fréquence du modulateur de blocage égale à la troisième fréquence harmonique de la grille/charge, où, si dans ladite fenêtre (3), comme fonction du modulateur de blocage, la commutation de la jambe de pont correspondante est interrompue et bloquée, analyser alors l'équilibre dans les températures de jonction de fonctionnement et/ou les pertes de puissance à travers les commutateurs actifs et analyser les pertes totales du convertisseur de source de tension ;
iii) mettre en oeuvre ou simuler le fonctionnement du convertisseur de source de tension avec une fréquence du modulateur de blocage égale à la neuvième fréquence harmonique de la grille/charge, où, si dans ladite fenêtre (3), comme fonction du modulateur de blocage, la commutation de la jambe de pont correspondante est interrompue et bloquée, analyser alors l'équilibre dans les températures de jonction de fonctionnement et/ou les pertes de puissance à travers les commutateurs actifs et les pertes totales du convertisseur de source de tension ;
iv) comparer l'équilibre et les pertes totales des étapes ii) et iii) et sélectionner la fréquence du modulateur de blocage soit selon l'étape ii), soit selon l'étape iii), présentant, comme critère primaire, le meilleur équilibre et, comme critère secondaire, les pertes totales les plus basses ;
v) mettre en oeuvre ou simuler le fonctionnement du convertisseur de source de tension avec la fréquence du modulateur de blocage sélectionnée, où comme fonction du modulateur de blocage, la commutation de la jambe de pont correspondante est interrompue et bloquée autant que possible dans ladite fenêtre (3), tout en changeant, de manière itérative, au moins un des paramètres de fonctionnement du convertisseur de source de tension suivants : la fréquence de commutation, la référence de tension de liaison à courant continu, le cycle de service du modulateur de blocage, le déphasage du modulateur de blocage concernant la grille, et optimiser l'équilibre dans les températures de jonction de fonctionnement et/ou les pertes de puissance à travers les commutateurs actifs et les pertes totales du convertisseur de source de tension en fonction du réglage de ces paramètres de fonctionnement jusqu'à atteindre des paramètres de fonctionnement optimaux pour le schéma de contrôle.

2. Procédé selon la revendication 1, dans lequel dans l'étape v), initialement, le déphasage du modulateur de blocage concernant la grille/charge est, de manière itérative, conçu pour trouver l'équilibre optimal et/ou la perte totale du convertisseur de source de tension.

3. Procédé selon l'une quelconque des revendications précédentes, dans lequel le convertisseur de source de tension est conçu pour agir comme convertisseur de source de tension de dérivation.

4. Procédé selon l'une quelconque des revendications précédentes, dans lequel pour une compensation des déséquilibres de la tension de liaison à courant continu, le rapport des intervalles de commutation sur les intervalles de non commutation dans la fenêtre (3), entre la demi-onde positive et la demi-onde négative de la grille, est déséquilibré.

5. Procédé selon l'une quelconque des revendications précédentes, dans lequel la largeur de bande du contrôleur courant (G(s)) est sélectionnée pour être au moins 5 fois, de préférence au moins 20 fois, supérieure, ou au moins 50 fois supérieure ou approximativement 50 fois supérieure à celle du contrôleur principal de tension de liaison à courant continu (H(s)).

6. Procédé selon l'une quelconque des revendications précédentes, dans lequel la largeur de bande du contrôleur de tension de liaison à courant continu (R(s)) est sélectionnée comme étant au moins inférieure à un tiers, de préférence au moins inférieure à un cinquième, de la boucle principale de tension.

7. Procédé selon l'une quelconque des revendications précédentes, dans lequel le convertisseur de source de tension est convertisseur VSC de type T à 3 niveaux ou un convertisseur VSC A-NPC à 3 niveaux.

8. Procédé de fonctionnement d'un convertisseur de source de tension, en particulier un filtre de puissance active de dérivation, utilisant un schéma de contrôle déterminé selon l'une quelconque des revendications précédentes.

9. Procédé selon l'une quelconque des revendications précédentes, dans lequel le convertisseur de tension de liaison à courant continu est mis en oeuvre avec une tension située dans la plage s'étendant de 300 à 10 000 V, de préférence dans la plage s'étendant de 700 à 1000 V.

10. Procédé selon l'une quelconque des revendications précédentes, dans lequel le convertisseur est mis en oeuvre en utilisant une fréquence de commutation située dans la plage s'étendant de 100 Hz à 1 MHz, de préférence dans la plage s'étendant de 5 kHz à 100 kHz.

11. Utilisation du procédé selon l'une quelconque des revendications 1 à 7 pour la détermination du schéma de contrôle d'un VSC à 3 niveaux conçu pour agir comme onduleur de grille photovoltaïque, comme redresseur, ou comme commande de moteur.
